Europäisches Patentamt

European Patent Office

Office européen des brevets

(11) Publication number: **0 258 018 B1**

# EUROPEAN PATENT SPECIFICATION

(45) Date of publication of patent specification: **06.03.91**  (51) Int. Cl.⁵: **B62D 25/18**

(21) Application number: **87307434.8**

(22) Date of filing: **21.08.87**

(54) **Anti-spray mudflap for vehicles.**

(30) Priority: **23.08.86 GB 8620558**

(43) Date of publication of application:
**02.03.88 Bulletin 88/09**

(45) Publication of the grant of the patent:
**06.03.91 Bulletin 91/10**

(84) Designated Contracting States:
**AT BE CH DE ES FR GB GR IT LI LU NL SE**

(56) References cited:
**US-A- 3 019 031**
**US-A- 3 310 344**
**US-A- 4 357 030**

(73) Proprietor: **SEA-LAND SERVICES INC.**
**P.O. Box 1050**
**Elizabeth New Jersey(US)**

(72) Inventor: **Ralph, John Christopher**
**Sea-Land Containerships Ltd. New South**
**Quay**
**The Dock 00084 Felixstowe,Suffolk(GB)**

(74) Representative: **Eyles, Christopher Thomas**
**W.P. THOMPSON & CO. High Holborn House**
**52-54 High Holborn**
**London WC1V 6RY(GB)**

## Description

This invention relates to a mudflap assembly for mounting on a vehicle chassis to reduce the rearward and upward projection of water spray and stones from the roadway by the wheels.

The dangers presented to drivers in wet weather by the rearward and upward projection of water spray and road debris from the wheels of a vehicle in front are well known. Water spray may completely obscure a driver's vision thus creating a dangerous condition even if only momentary. Flying stones or other debris from the road surface may, if it impacts a windscreen of another vehicle, cause it to shatter or to craze or crack.

Recognising the contribution that spray and flying stones make towards road accidents, many countries of the world have enacted legislation relating to the provision of means for obviating or, at least, mitigating this problem.

The rearward and upward projection of water spray and road debris may be reduced by the provision of mudflaps attached to the vehicle chassis proximate the rear wheels. Mudflaps are sheets of, normally, flexible material such as rubber which are attached to and depend from the vehicle chassis behind the wheels presenting a barrier to the projection of spray and debris. As a generalisation, the larger the mudfaps, the greater will be the protection given and the nearer the lower edge of the flap is to the road surface the better the protection will be.

As the mudfaps are increased in length to approach closer to the road surface another problem arises in that when a reversing vehicle encounters an obstruction, the mudflap is tightly pinched between the wheel and the obstruction and further reversing may tear the material of the flap or wrench the flap from its mounting. It is to this problem that the present invention is addressed.

The problem described may be overcome by the provision of a flap which is able to stretch rather than tear. This is the solution suggested in US-A-3 019 031 where a flap fabricated of resilient material such as sheet rubber is provided with a plurality of slits or apertures across its width to increase its ability to stretch when caught between the wheels and an obstruction and to spring back into position when released from the obstruction.

Another solution suggested is to provide a resiliently sprung or hinged mount for the attachment of the flap to the vehicle. Such an arrangement is the subject of US-A-I 947 525 which proposes the use of springs in the mounting, US-A-3 737 176 which uses a hinged and spring loaded system, and US-A-3 401 953 which suggests a spring loaded mounting sub-assembly to which the flap is itself attached through a another resilient mounting.

Another approach has been to use mounting means which will release the flap if it is subjected to downward stress but is of such construction that it is relatively simple for the driver to replace the flap in the mount. US-A-3 158 386, 3 333 868, 3 778 086 and 4 326 727 describe mudflap construction which embody this principle. US-A-3 051 508 also adopts this approach but has a top flap portion which is relatively rigid and which is attached to the vehicle chassis, and a lower section of relatively flexible material which depends from the top section toward the road surface and is attached to the top section in such a way that it is easily torn off it is subjected to downward stress when obstructed. The lower section is simply treated as being disposable.

Yet another suggestion for tackling this problem is the subject of US-A-4 357 030. A top section for attachment to the vehicle chassis is connected to a lower bottom flap via a central multiply hinged section. The hinges are connected one with another by a spring which allows the bottom flap to be drawn downwardly when obstructed and to spring back into position when released.

US-A-3 129 956 also addresses this problem and also two other problems associated with simple resilient sheet form of mudflap. When a vehicle is travelling at speed the windstream deflects a simple flexible sheet in a rearward direction thus raising its lower edge to a greater height from the road thereby reducing its effectiveness as a barrier to spray and debris. There is also a problem associated with simple flexible sheets in that they suffer a great amount of damage from impact by road debris. These problems may be overcome by fabricating the mudflap of rigid, impact-resistant material such as sheet metal but this only aggravates the problem of damage to the mudflap if it is caught on an obstruction as described above. In US-A-3 129 956 it is proposed that a resilient sheet type of flap be overlaid by a series of metal members which mutually engage in such a manner as to permit flexing of the mudflap toward the wheel while resisting rearward flexing. The metal-overlaid surface of the flap which is presented to the wheel provides impact resistance.

In US-A-3 088 751, an upper rigid section of a mudflap is of louvred construction with the louvres directed downwardly in the rearward direction and the space between louvres fitted with wire mesh. This configuration reduces the wind resistance of the upper section. A spring-positioned lower section of the flap is also of rigid but imperforate construction and depends from the upper louvred section by a pair of tension springs fitted at to the sides of the lower and upper sections by springs attached thereto by outwardly extending hooks. The upper section has a pair of shallow, downwardly-opening guide slots into which the spring-engaging hooks of the lower section locate. If the lower section is caught by an obstruction as described above, it is able to move downward in a generally vertical direction to avoid damage to itself or the upper section. It is not entirely clear whether it is intended that the lower section, dragged from its guide slots when caught by an obstruction, should spring back into the slots when released as no provision seems to be provided to assist relocation of the pins in the slots and the slots themselves would appear to be too narrow and shallow to ensure reengagement.

An object of the present invention is to obviate or mitigate the aforesaid disadvantages.

According to the present invention there is provided a mudflap assembly for mounting on a vehicle chassis including a frame, means for securing the frame to a chassis, a sheet-form flap, and means for resiliently attaching the flap to the frame, characterised in that the frame has a pair of cross-braced members of inwardly facing channel section and that the sheet-form flap slidably engages the channel-section side members.

The frame may be secured to the chassis by means of bolts, screws or like fastening means which may be passed through the cross-bracing.

The means for resilient mounting of the flap to the frame may be tension spring means having opposed ends fixed to flap and frame.

The present invention will now be described, by way of illustration, with reference to the accompanying drawings of which;

Figure 1 is a drawing of the assembly of this invention view from the rear of a vehicle;

Fig. 2 is a sectional view of the assembly shown in Fig. 1 along the line X-X in the arrowed direction; and,

Fig. 3 is a side view of the assembly of the invention, illustrating the action of the assembly when it encounters an obstruction during reversing of a vehicle to which it is fitted.

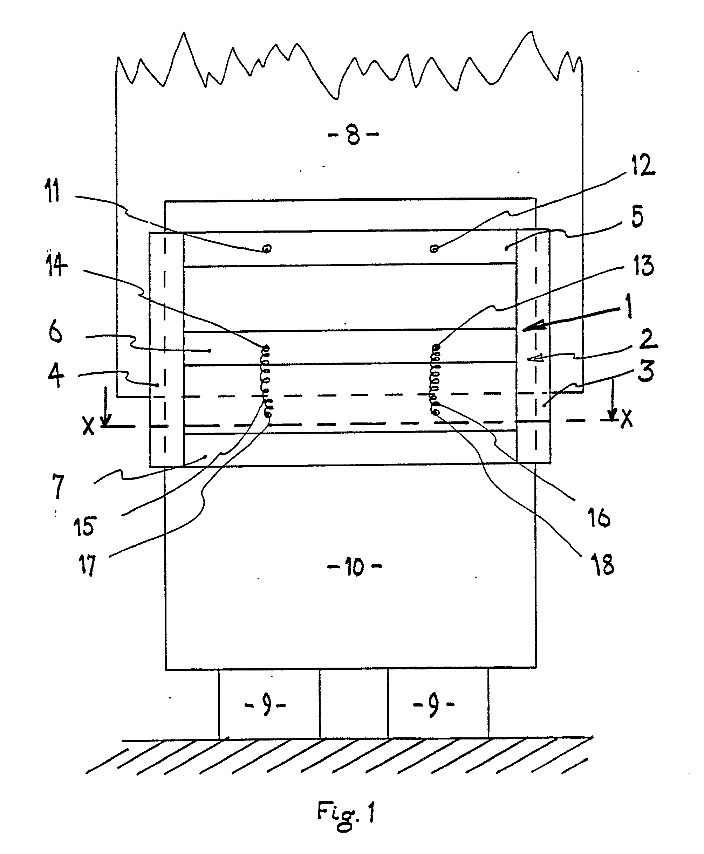

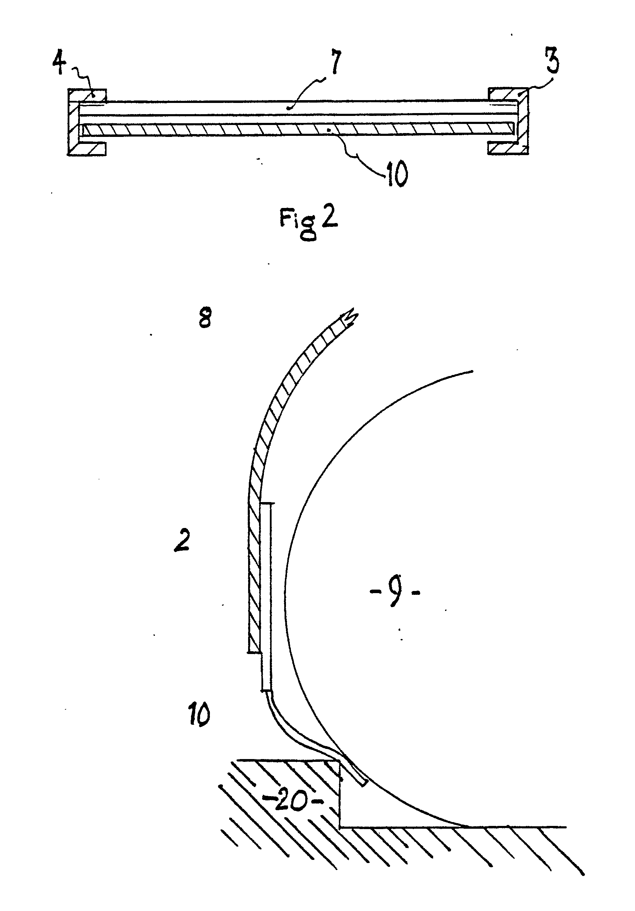

Referring to Figs. 1 and 2, an anti-spray mudflap assembly 1 consists of a frame 2 which has side members 3 and 4 and cross-bracing members 5, 6 and 7. The assembly 1 is fixedly secured to a vehicle chassis via a mudguard 8, rearward of the wheels 9.

As shown in the view of Fig.2, side members 3 and 4 of the frame 2 have channel-section. A flap 10 in sheet form, which may be of flexible or inflexible material, is engaged slidably in the channel-section side-members 3 and 4, forwardly, with respect to the vehicle, of the cross-bracing members 5, 6 and 7 which therefore prevent or restrict rearward flexing of the flap 10 under wind pressure when in use on a vehicle travelling at speed.

Bolts 11 to 14 are provided in throughpassges in the cross-bracing members 5 and 6 for securement of the frame 2 to the mudguard 8 of the vehicle.

Flap 10 is resiliently mounted on to the frame 2 by means of a pair of side-by-side vertically acting tension springs 15 and 16. Springs 15 and 16 are attached to the flap 10 at one end by bolts 17 and 18 and to the cross-bracing member 6 by the bolts 13 and 14 which also secure the frame 2 to the mudguard 8.

Referring now to Fig. 3: when a vehicle reverses into an obstruction 20 such, as a bump-stop bar, then, if the obstruction is high enough it "pinches" the flap 10 between the obstruction 20 and the wheel 9 and further reversing will draw the flap 10 downwardly from the frame 2. The flap 10 would desirably be dimensioned to be long enough not to be withdrawn completelyunder normal circumstances from the channel-section side members 3 and 4 so that when the vehicle move forward to release the flap 10 it springs back under the action of the springs 15 and 16 into the channels of the side members 3 and 4.

## Claims

1. A mudflap assembly for mounting on vehicle chassis including a frame (2), means for securing the frame to a chassis, a sheet-form flap (10), and means (15,16) for resiliently attaching the flap (10) to the frame (2), characterised in that the frame (2) has a pair of cross-braced side members (3,4) of inwardly facing channel-section and that the sheet-form flap (10) slidably engages the channel section side members (3,4).

2. A mudflap assemble as claimed in claim 1 characterised in that the means for securing the frame to the chassis comprises bolts (13,14), screws or like fastening means passing through the cross-bracing (6).

3. A mudflap assembly as claimed in claim 1 or claim 2 characterised in that the means for resiliently attaching the flap (10) to the frame (2) comprises tension spring means (15,16) having opposed ends fixed to flap (10) and frame (2).

## Revendications

1. Ensemble de bavolet destiné à être monté sur un châssis de véhicule, comprenant un cadre (2), des moyens servant à fixer le cadre à un châssis, un bavolet (10) en forme de feuille, et des moyens (15,16) servant à fixer le bavolet (10) au cadre (2) par une liaison élastique, caractérisé en ce que le cadre (2) comprend une paire d'éléments latéraux (3,4) à section en U regardant vers l'intérieur et liés par des éléments de liaison transversaux, et en ce que le bavolet (10) en forme de feuille coulisse dans les éléments latéraux (3,4) à section en U.

2. Ensemble de bavolet selon la revendication 1, caractérisé en ce que les moyens servant à fixer le cadre au châssis comprennent des boulons (13,14), vis ou moyens de fixation équivalents passant à travers l'élément de liaison transversal (6).

3. Ensemble de bavolet selon la revendication 1 ou la revendication 2, caractérisé en ce que les moyens servant à fixer élastiquement le bavolet (10) au cadre (2) comprennent des moyens du type ressort de traction (15,16) dont les extrémités opposées sont fixées au bavolet (10) et au cadre (2).

## Ansprüche

1. Eine Schmutzfänger-Anordnung zur Befestigung an Fahrzeug-Fahrgestellen, mit einem Rahmen (2), Mitteln zur Befestigung des Rahmens an einem Fahrgestell, einer plattenförmigen Lasche (10) und einer Einrichtung (15,16) zur elastischen Befestigung der Lasche (10) am Rahmen (2), dadurch **gekennzeichnet** , daß der Rahmen (2) ein Paar querverstrebte Seitenträger (3,4) mit nach innen gerichtetem U-Querschnitt aufweist, und daß die plattenförmige Lasche (10) im Gleiteingriff mit den U-querschnittsförmigen Seitenträgern (3,4) steht.

2. Eine Schmutzfänger-Anordnung nach Anspruch 1, dadurch **gekennzeichnet** , daß die Mittel zur Befestigung des Rahmens am Fahrgestell Bolzen (13,14), Schrauben oder dgl. Befestigungsmittel umfaßt, die die Querstreben (6) durchdringen.

3. Eine Schmutzfänger-Anordnung nach Anspruch 1 oder Anspruch 2, dadurch **gekennzeichnet,** daß die Einrichtung zur elastischen Befestigung der Lasche (10) am Rahmen (2) Zugfedermittel (15,16) mit gegenüberliegenden, an der Lasche (10) und am Rahmen (2) befestigten Enden umfaßt.

Fig. 1

4       7       3

10

Fig 2

8

2

-9-

10

-20-